# EUROPEAN PATENT APPLICATION

(11) **EP 3 200 005 A1**
(43) Date of publication of application: **02.08.2017**
(21) Application number: 15843831.7
(22) Date of filing: 10.06.2015
(51) Int. Cl.: G02B 27/01, B60R 16/02, G02B 27/26, G03B 35/24, H04N 5/74, H04N 13/04

(54) **HEAD-UP DISPLAY AND MOVING BODY**

(30) Priority: 26.09.2014 JP 2014196562
(71) Applicant: Panasonic Intellectual Property Management Co., Ltd., Osaka-shi, Osaka 540-6207 (JP)
(72) Inventor: HAYASHI, Katsuhiko, Osaka-shi Osaka 540-6207 (JP)
(74) Representative: Grünecker Patent- und Rechtsanwälte PartG mbB
(86) International application number: PCT/JP2015/002897
(87) International publication number: WO 2016/047009

(57) **Abstract**

A head-up display of the present disclosure includes: a controller that controls display of an image; an image display element in which right eye pixels for displaying a right eye virtual image and left eye pixels for displaying a left eye virtual image are alternately arranged; an optical system including optical elements which are arranged at specified intervals, each of the optical elements being disposed so as to be tilted at a specified angle with respect to an arrangement direction of the pixels of the image display element to divide output light of the image display element into a direction toward a right eye and a direction toward a left eye; and a first wave plate disposed between the image display element and the optical system to rotate a polarization direction of the output light of the image display element with respect to the arrangement direction of the pixels of the image display element.

## Description

### TECHNICAL FIELD

The present disclosure relates to a head-up display capable of displaying a stereo image visible to the naked eye and to a movable vehicle equipped with the head-up display.

### BACKGROUND ART

The head-up display (HUD) is known as a means for superposing a virtual image of auxiliary information for driving assistance on a visual field of a driver on a vehicle such as an automobile or the like. Further, a head-up display using a stereoscopic display is disclosed (see, for example, PTL1 of the Patent Literature). In this stereoscopic display, regular service information such as the travelling speed and the remaining fuel is regularly displayed so that the driver visually recognizes that the information exists at a position apart by an image distance from the driver. Occasional basis service information such as the navigation arrow icon is displayed so that the driver visually recognizes that the information originally exists at the position apart by the image distance from the driver, then gradually moves away from the driver toward an intersection, and finally exists in the vicinity of the intersection.

### Citation List

### Patent Literature

PTL 1: Unexamined Japanese Patent Publication No. 2005-301144

### SUMMARY OF THE INVENTION

An object of the present disclosure is to provide a head-up display capable of displaying a stereo image visible to the naked eye with improved visibility.

A head-up display in accordance with the present disclosure includes: a controller that controls display of an image; an image display element in which right eye pixels for displaying a right eye virtual image and left eye pixels for displaying a left eye virtual image are alternately arranged; an optical system including optical elements which are arranged at specified intervals, each of the optical elements being disposed so as to be tilted at a specified angle with respect to an arrangement direction of the pixels of the image display element to divide output light of the image display element into a direction toward a right eye and a direction toward a left eye; and a first wave plate disposed between the image display element and the optical system to rotate a polarization direction of the output light of the image display element with respect to the arrangement direction of the pixels of the image display element.

Further, a movable vehicle in accordance with the present disclosure includes the head-up display of the present disclosure, and a windshield that reflects light output from the head-up display.

It is possible by the present disclosure to provide a head-up display having improved visibility and a movable vehicle having the visibility-improved head-up display.

### BRIEF DESCRIPTION OF THE DRAWINGS

FIG. 1 is a schematic diagram illustrating a cross-section of a movable vehicle equipped with a head-up display in accordance with a first exemplary embodiment.
FIG. 2 is a perspective view of the head-up display in accordance with the first exemplary embodiment.
FIG. 3 is a diagram illustrating a relationship among a left eye virtual image viewed by the left eye of an observer, a right eye virtual image viewed by the right eye of the observer and a stereo image in accordance with the first exemplary embodiment.
FIG. 4 is a graph showing polarized light reflection characteristics of a windshield in accordance with the first exemplary embodiment.
FIG. 5 is a perspective view of another head-up display in accordance with the first exemplary embodiment.
FIG. 6 is a perspective view of a head-up display in accordance with a second exemplary embodiment.

### DESCRIPTION OF EMBODIMENTS

Hereinafter, an exemplary embodiment will be described with reference to the accompanying drawings as appropriate. However, unnecessarily detailed description may occasionally be omitted. For example, detailed description of well-known matters and redundant description of substantially the same configuration may occasionally be omitted. This is to avoid the following description from becoming unnecessarily redundant, and to allow any person skilled in the art to easily understand the description.

Also, it should be noted that the following description and the accompanying drawings are provided to allow any person skilled in the art to fully understand the present disclosure, and that it is not intended to limit the subject matter described in the claims by the following description.

### FIRST EXEMPLARY EMBODIMENT

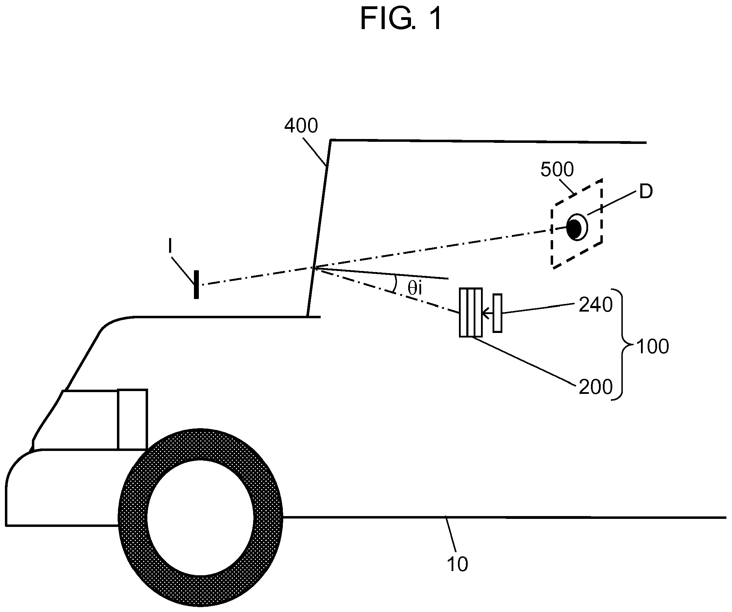

Hereinafter, a first exemplary embodiment will be described with reference to FIGS. 1 to 5.

### 1 - 1. Configuration of Head-Up Display

FIG. 1 is a schematic diagram illustrating a cross-section of a movable vehicle equipped with a head-up display in accordance with a first exemplary embodiment. Referring to FIG. 1, head-up display 100 is installed in a dashboard at the driver's seat side of automobile 10. Head-up display 100 is configured by display unit 200 and controller 240.

Controller 240 controls an image display operation of display unit 200. Display unit 200 displays an image. Images to be displayed include various kinds of information such as, for example, a road navigation, a distance to a vehicle in front, a residual battery capacity, and a current travelling speed. The image displayed by display unit 200 is reflected by windshield 400 to be guided to eye box 500 of observer D, or a driver of automobile 10, to provide observer D with virtual image I. Eye box 500 is an area in which observer D can view full virtual image I without any lacking portion.

### 1 - 2. Configuration of Display Unit - Part 1

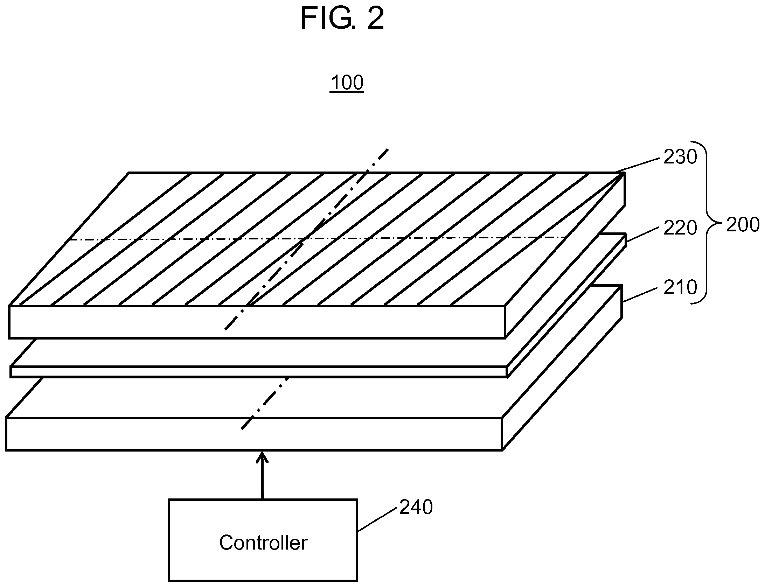

FIG. 2 is a perspective view of the head-up display in accordance with the first exemplary embodiment. Display unit 200 includes image display element 210, first wave plate 220, and liquid crystal lens 230.

Image display element 210 is a liquid crystal display. However, image display element 210 may not be limited to the liquid crystal display, and may be any other display element such as, for example, an organic light-emitting diode display or a plasma display panel (PDP).

Image display element 210 is an element in which left eye pixels for displaying an image for the left eye and right eye pixels for displaying an image for the right eye are alternately arranged.

Liquid crystal lens 230 is an optical element for stereoscopically displaying an image. Therefore, liquid crystal lens 230 may be substituted by any other optical element that can stereoscopically display an image. The optical element may, for example, be a parallax barrier system optical element or a lenticular lens.

Liquid crystal lens 230 is formed by sealing a liquid crystal in a lens-shaped space and has such a property that its refractive index changes depending on the orientation direction of the liquid crystal. The refractive index of liquid crystal lens 230 is changed by adjusting a voltage applied to liquid crystal lens 230 to obtain a desired focal length.

To display a right eye virtual image from the right eye pixels of image display element 210 and a left eye virtual image from the left eye pixels of image display element 210, liquid crystal lens 230 includes lenses each of which is disposed so as to be tilted at a specified angle with respect to the arrangement direction of the pixels of image display element 210.

Liquid crystal lens 230 including the lenses disposed to be tilted in this manner can prevent generation of a moire pattern which would otherwise be generated due to interference between the pixels of image display element 210 and the arrangement pitches of the lenses of liquid crystal lens 230. In this case, orientation direction of the liquid crystal molecules in liquid crystal lens 230 may also be aligned along the tilt of the lenses of liquid crystal lens 230 to prevent reduction of the brightness.

First wave plate 220 is disposed between image display element 210 and liquid crystal lens 230. First wave plate 220 may be a half-wave plate.

First wave plate 220 rotates the polarization direction of the light output from image display element 210 to the arrangement direction of liquid crystal lens 230.

Reduction of the brightness can be suppressed by first wave plate 220 rotating the polarization direction of the light output from image display element 210 to the arrangement direction of liquid crystal lens 230.

First wave plate 220 may not be tilted so as to accurately coincide with the arrangement direction of liquid crystal lens 230, but may be tilted at least slightly from the arrangement direction of the pixels of image display element 210 to suppress reduction of the brightness.

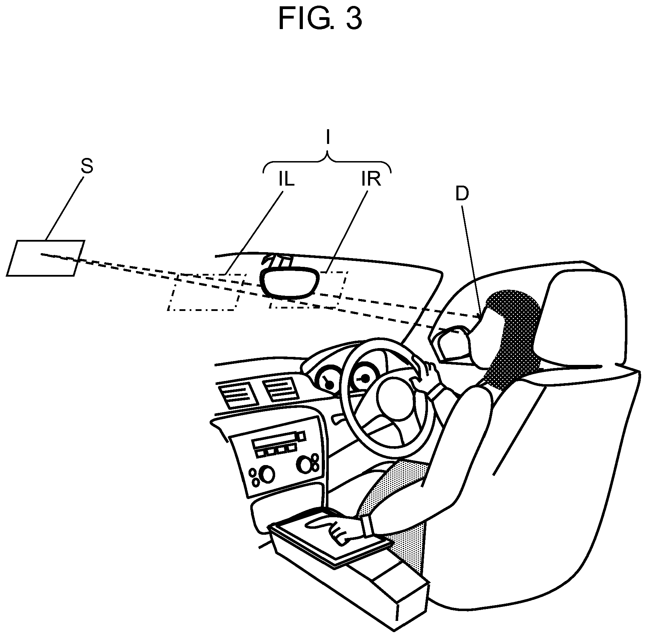

FIG. 3 is a diagram illustrating a relationship among left eye virtual image IL viewed by the left eye of observer D, right eye virtual image IR viewed by the right eye of observer D and stereo image S. When observer D uses head-up display 100, virtual images I of parallax images, or left eye virtual image IL and right eye virtual image IR, are displayed at a specified position. Observer D viewing left eye virtual image IL and right eye virtual image IR perceives that stereo image S, which is a fused image obtained by stereoscopically viewing these virtual images, exists at a position farther than the specified position.

### 1 - 3. Configuration of Display Unit - Part 2

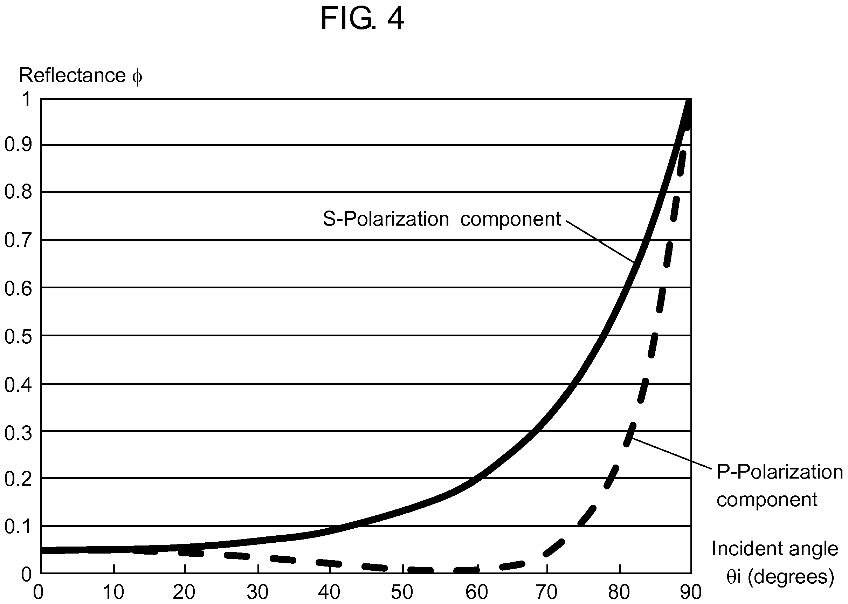

Next, description will be made on polarized light reflection characteristics of windshield 400. FIG. 4 is a graph showing polarized light reflection characteristics of the windshield. The horizontal axis indicates incident angle θi (degrees), and the vertical axis indicates reflectance φ. The solid line indicates an S-polarization component at incident angle θi, and the dotted line indicates a P-polarization component at incident angle θi. As shown in FIG. 1, incident angle θi is an angle made by a light ray output from the center of display unit 200 and a perpendicular of windshield 400. Incident angle θi is determined by the arrangement of display unit 200, the tilt of windshield 400 and the position of the viewpoint of observer D. As shown in FIG. 4, the reflectance φ for the P-polarization component becomes as low as 0.05 or less when incident angle θi becomes 20 degrees or more. Particularly, incident angle θi in the vicinity of 60 degrees becomes the Brewster's angle, at which reflectance φ for the P-polarization component becomes 0 (zero). Brightness of the light incident on observer D becomes higher as reflectance φ of windshield 400 becomes higher. Accordingly, it can be said that with respect to a light ray output from display unit 200, the brightness of the light incident on observer D increases as the S-polarization component increases.

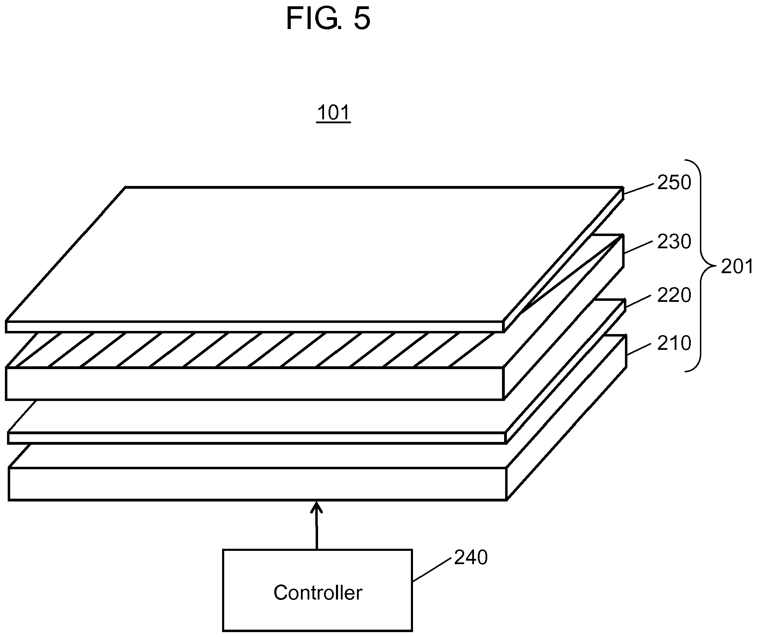

FIG. 5 is a perspective view of another head-up display in accordance with the first exemplary embodiment. Head-up display 101 is configured by display unit 201 and controller 240. Display unit 201 includes image display element 210, first wave plate 220, liquid crystal lens 230, and second wave plate 250. The configuration of head-up display 101 is different from that of head-up display 100 in that second wave plate 250 is added. In other words, the configuration of head-up display 101 is the same as that of head-up display 100 except for second wave plate 250.

Second wave plate 250 is a half-wave plate. Second wave plate 250 is rotated so as to increase the S-polarization component of the light output from liquid crystal lens 230.

In this manner, the brightness of the light incident on observer D can be made higher by rotating second wave plate 250.

Further, assume that observer D is wearing polarized sunglasses. Polarized sunglasses reduce transmission of the S-polarization component. Accordingly, when second wave plate 250 is rotated so as to increase the S-polarization component of the light output from liquid crystal lens 230, the S-polarization component of the light output from windshield 400 is reduced by the polarized sunglasses. Therefore, when observer D wears polarized sunglasses, the brightness of the light incident on observer D reduces, so that visibility of virtual image I reduces.

In the case of assuming that observer D may wear polarized sunglasses, second wave plate 250 may be rotated so that the S-polarization component and the P-polarization component of the light output from liquid crystal lens 230 become in the ratio 1:1.

By rotating second wave plate 250 in the manner as described above, it is possible to adjust the brightness of the light incident on observer D so as to increase the brightness of the light incident on observer D.

### 1 - 4. Advantageous Effects

As described above, a head-up display in accordance with the present exemplary embodiment includes: a controller that controls display of an image; an image display element in which right eye pixels for displaying a right eye virtual image and left eye pixels for displaying a left eye virtual image are alternately arranged; an optical system including optical elements which are arranged at specified intervals, each of the optical elements being disposed so as to be tilted at a specified angle with respect to an arrangement direction of the pixels of the image display element to divide output light of the image display element into a direction toward a right eye and a direction toward a left eye; and a first wave plate disposed between the image display element and the optical system to rotate a polarization direction of the output light of the image display element with respect to the arrangement direction of the pixels of the image display element.

Further, in the head-up display in accordance with the present exemplary embodiment, the first wave plate rotates the polarization direction by an angle which is approximately the same as the specified angle at which the optical system is tilted.

With this configuration, it is possible to prevent generation of a moire pattern which would otherwise be generated due to interference between image display element 210 and liquid crystal lens 230, and thus to prevent reduction of the brightness.

Further, the head-up display in accordance with the present exemplary embodiment may include a second wave plate disposed at a position in a direction in which light is output from the optical system.

Further, in the head-up display in accordance with the present exemplary embodiment, the second wave plate may rotate the polarization direction of the light output from the optical system so as to increase the S-polarization component.

With this configuration, it is possible to increase the brightness of the light incident on observer D.

Further, in the head-up display in accordance with the present exemplary embodiment, the second wave plate may rotate the polarization direction of the light output from the optical system so that the S-polarization component and the P-polarization component become approximately the same in ratio as each other.

With this configuration, the brightness of the light incident on observer D can be increased when observer D is wearing polarized sunglasses.

### SECOND EXEMPLARY EMBODIMENT

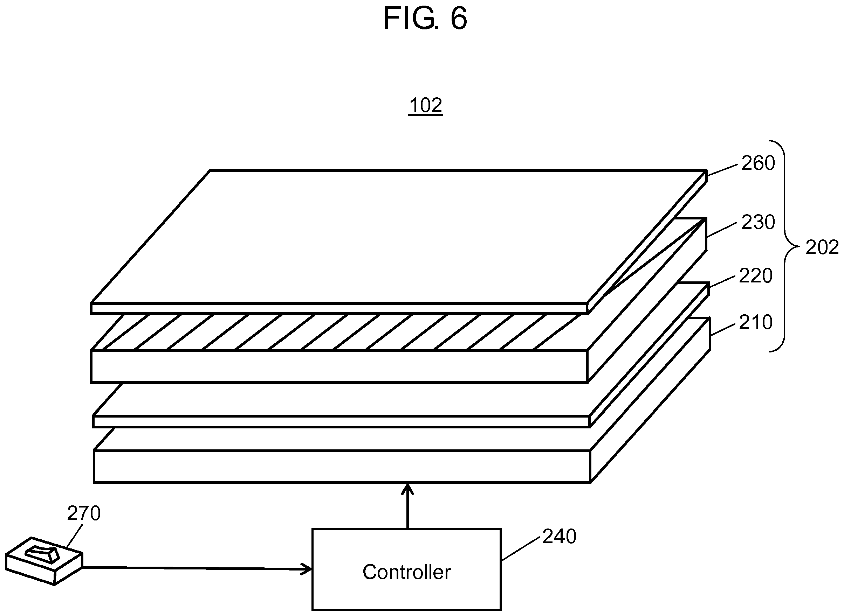

Hereinafter, a second exemplary embodiment will be described with reference to FIG. 6. In the second exemplary embodiment, parts which are different from the configuration of the first exemplary embodiment will mainly be described, and description on the same parts in configuration as those of the first exemplary embodiment will be omitted.

### 2 - 1. Configuration of Head-Up Display

A configuration of head-up display 102 in accordance with the second exemplary embodiment will be described mainly regarding the points which are different from head-up display 100 described in the first exemplary embodiment.

In head-up display 101 in accordance with the first exemplary embodiment, the polarization state of the light output from the second wave plate 250 is the same in both of the case in which observer D wears polarized sunglasses and the case in which observer D does not wear polarized sunglasses.

In the second exemplary embodiment, on the other hand, such a head-up display is provided that can change the brightness of the light output from the head-up display so as to be different between the case in which observer D wears polarized sunglasses and the case in which observer D does not wear polarized sunglasses.

### 2 - 2. Configuration of Display Unit

FIG. 6 is a perspective view of a head-up display in accordance with the second exemplary embodiment. Referring to FIG. 6, head-up display 102 is configured by display unit 202, controller 240, and switch 270.

Display unit 202 includes image display element 210, first wave plate 220, liquid crystal lens 230, and polarization conversion element 260.

The configuration of head-up display 102 is different from the configuration of head-up display 100 of the first exemplary embodiment in that polarization conversion element 260 and switch 270 are added. That is, the configuration of head-up display 102 is the same as the configuration of head-up display 100 except for polarization conversion element 260 and switch 270.

Polarization conversion element 260 may, for example, be a twisted nematic liquid crystal element. The twisted nematic liquid crystal element rotates a polarization direction of light passing through it by 90 degrees when a voltage is applied.

Switch 270 is disposed at such a position that observer D in automobile 10 can turn on or off switch 270. Observer D may turn off switch 270 when observer D is not wearing polarized sunglasses, and may turn on switch 270 when observer D is wearing polarized sunglasses.

Controller 240 detects the state of switch 270. Controller 240 applies a voltage to polarization conversion element 260 when switch 270 is in the turned-on state, and does not apply the voltage to polarization conversion element 260 when switch 270 is in the turned-off state.

The polarization characteristic of polarization conversion element 260 is set so as to increase the S-polarization component transmitting through polarization conversion element 260 when no voltage is applied to polarization conversion element 260. As a result, the polarized light reflection characteristics of the light reflected from windshield 400 increase in S-polarization component.

The polarization characteristic of polarization conversion element 260 is set to rotate the polarization direction of light transmitting through polarization conversion element 260 by 90 degrees so as to increase the P-polarization component transmitting through polarization conversion element 260 when a voltage is applied to polarization conversion element 260. As a result, the polarized light reflection characteristics of the light reflected from windshield 400 increase in P-polarization component.

Although it has been described that polarization conversion element 260 rotates the polarization direction of the light transmitting through it by 90 degrees when a voltage is applied to polarization conversion element 260, polarization conversion element 260 may not rotate the polarization direction by 90 degrees. Polarization conversion element 260 may rotate the polarization direction of the light transmitting through it by an angle in a range larger than 0 degrees and equal to or smaller than 90 degrees.

Although it has been described that a voltage is applied to polarization conversion element 260 when observer D is wearing polarized sunglasses, the present disclosure is not limited to this. For example, a voltage may be applied to polarization conversion element 260 when observer D is not wearing polarized sunglasses.

Although it has been described in the present exemplary embodiment that a switch is used to specify whether or not observer D is wearing polarized sunglasses, the present disclosure is not limited to this. For example, it may be configured such that one of various sensors such as, for example, a camera provided within automobile 10, automatically detects whether or not observer D is wearing polarized sunglasses.

### 2 - 3. Advantageous Effects

As described above, a head-up display in accordance with the present exemplary embodiment includes: a controller that controls display of an image; an image display element in which right eye pixels for displaying a right eye virtual image and left eye pixels for displaying a left eye virtual image are alternately arranged; an optical system including optical elements which are arranged at specified intervals, each of the optical elements being disposed so as to be tilted at a specified angle with respect to an arrangement direction of the pixels of the image display element to divide output light of the image display element into a direction toward a right eye and a direction toward a left eye; a first wave plate disposed between the image display element and the optical system to rotate a polarization direction of the output light of the image display element with respect to the arrangement direction of the pixels of the image display element; and a polarization conversion element disposed at a position in a direction in which light is output from the optical system. The controller controls application of a voltage to the polarization conversion element.

Further, according to the head-up display of the present exemplary embodiment, the polarization conversion element is set to transmit the light output from the optical system so that the S-polarization component increases when no voltage is applied and that the P-polarization component increases when a voltage is applied.

With this configuration, it is possible to increase the brightness of light incident on observer D depending on whether or not observer D is wearing polarized sunglasses.

### OTHER EXEMPLARY EMBODIMENTS

In the above description, first and second exemplary embodiments have been described as examples of techniques according to the present disclosure. However, the techniques according to the present disclosure are not limited to the above-described exemplary embodiments, and may be applied to other exemplary embodiments in which modifications, substitutions, additions, and/or omissions are made as appropriate. Also, the components described in the above first and second exemplary embodiments may be appropriately combined to configure a new exemplary embodiment.

Although head-up displays each using a windshield have been described in the above exemplary embodiments, the present disclosure is not limited to the above-described head-up displays. The present disclosure can be applied to such a head-up display that is provided in its optical path with a mirror having a positive power or a convex lens to display a virtual image.

The display unit is not limited to the configuration as described in the above exemplary embodiments. The display unit may include the optical system for forming a virtual image.

### INDUSTRIAL APPLICABILITY

The present disclosure is applicable to a head-up display capable of displaying a stereo image that can be seen by the naked eye, and to a movable vehicle equipped with the head-up display.

### REFERENCE MARKS IN THE DRAWINGS

- 10: automobile
- 100, 101, 102: head-up display
- 200, 201, 202: display unit
- 210: image display element
- 220: first wave plate
- 230: liquid crystal lens
- 240: controller
- 250: second wave plate
- 260: polarization conversion element
- 270: switch
- 400: windshield
- 500: eye box

## Claims

1. A head-up display comprising:
a controller that controls display of an image;
an image display element in which right eye pixels for displaying a right eye virtual image and left eye pixels for displaying a left eye virtual image are alternately arranged;
an optical system including optical elements which are arranged at specified intervals, each of the optical elements being disposed so as to be tilted at a specified angle with respect to an arrangement direction of the pixels of the image display element to divide output light of the image display element into a direction toward a right eye and a direction toward a left eye; and
a first wave plate disposed between the image display element and the optical system to rotate a polarization direction of the output light of the image display element with respect to the arrangement direction of the pixels of the image display element.

2. The head-up display according to claim 1, wherein the first wave plate rotates the polarization direction by an angle which is approximately the same as the specified angle at which the optical system is tilted.

3. The head-up display according to claim 1, further comprising a second wave plate disposed at a position in a direction in which light is output from the optical system.

4. The head-up display according to claim 3, wherein the second wave plate rotates a polarization direction of the light output from the optical system so that a S-polarization component increases.

5. The head-up display according to claim 3, wherein the second wave plate rotates a polarization direction of the light output from the optical system so that an S-polarization component and a P-polarization component become approximately the same in ratio as each other.

6. The head-up display according to claim 1, further comprising a polarization conversion element disposed at a position in a direction in which light is output from the optical system,
wherein the controller controls application of a voltage to the polarization conversion element.

7. The head-up display according to claim 6, wherein the polarization conversion element is set:
to transmit the light output from the optical system so that the S-polarization component increases when no voltage is applied by the controller, and
to transmit the light output from the optical system so that the P-polarization component increases when a voltage is applied by the controller.

8. A movable vehicle comprising:
the head-up display according to claim 1; and
a windshield that reflects light output from the head-up display.
